# EUROPEAN PATENT SPECIFICATION

(11) **EP 1 818 096 B1**
(45) Date of publication and mention of the grant of the patent: **15.12.2010**
(21) Application number: 07101477.3
(22) Date of filing: 31.01.2007
(51) Int. Cl.: B01J 23/10, B01J 23/72, B01J 23/74, C01B 3/58, H01M 8/06

(54) **Catalyst for oxidizing carbon monoxide in a reformer, and fuel cell plant including said reformer**
Katalysator zum Oxidieren von Kohlenmonoxid in einem Reformer und eine Brennstoffzellenanlage whelche diesen Reformer enthält
Catalyseur pour l'oxydation de monoxyde de carbone dans un réformeur, et dispositif de pile à combustible comprenant ce reformeur

(30) Priority: 14.02.2006 KR 20060014072
(43) Date of publication of application: 15.08.2007
(73) Proprietor: Samsung SDI Co., Ltd., Gyeonggi-do (KR)
(72) Inventor: Gorobinskiy, Leonid, Gyeonggi-do (KR)
(74) Representative: Killin, Stephen James

(56) References cited:
- WO-A-02/26619
- US-A- 4 492 770
- US-A- 5 830 425
- US-A1- 2004 151 647
- WON PARK J ET AL: "Selective oxidation of CO in hydrogen-rich stream over Cu-Ce catalyst promoted with transition metals" INTERNATIONAL JOURNAL OF HYDROGEN ENERGY, ELSEVIER SCIENCE PUBLISHERS B.V., BARKING, GB, vol. 30, no. 2, February 2005 (2005-02), pages 209-220, XP004670188 ISSN: 0360-3199

## Description

The present invention relates to a carbon monoxide oxidizing catalyst for a reformer of a fuel cell system, and a fuel cell system including the same. More particularly, the present invention relates to a carbon monoxide oxidizing catalyst having carbon monoxide oxidation efficiency for a reformer of a fuel cell system, and a fuel cell system including the same.

A fuel cell is a power generation system for producing electrical energy through an electrochemical redox reaction of an oxidant and a fuel, such as hydrogen, or a hydrocarbon-based material, such as methanol, ethanol, natural gas, and the like.
Such a fuel cell is a clean energy source which can replace fossil fuels. It includes a stack composed of unit cells and produces various ranges of power output. Since it has four to ten times higher energy density than a small lithium battery, it has been highlighted as a small portable power source.

Representative exemplary fuel cells include a polymer electrolyte membrane fuel cell (PEMFC) and a direct oxidation fuel cell (DOFC). Direct oxidation fuel cells include a direct methanol fuel cell which uses methanol as a fuel.

The polymer electrolyte fuel cell has the advantages of high energy density and high power, but it also has problems in that there is a need to carefully handle hydrogen gas, and there is a requirement for accessory facilities, such as a fuel reforming processor for reforming methane or methanol, natural gas and the like, in order to produce hydrogen as the fuel gas.

Conversely, a direct oxidation fuel cell has lower energy density than that of the polymer electrolyte fuel cell, but it has the advantages of easy handling of the polymer electrolyte fuel cell, a low operation temperature, and no need for additional fuel reforming processors.

In the above-mentioned fuel cell system, a stack that generates electricity substantially includes several to scores of unit cells stacked adjacent to one another, and each unit cell is formed of a membrane-electrode assembly (MEA) and a separator (also referred to as a bipolar plate). The membrane-electrode assembly is composed of an anode (also referred to as a "fuel electrode" or an "oxidation electrode") and a cathode (also referred to as an "air electrode" or a "reduction electrode") which are separated by a polymer electrolyte membrane.

A fuel is supplied to the anode and adsorbed on catalysts of the anode, and the fuel is oxidized to produce protons and electrons. The electrons are transferred into the cathode via an external circuit, and the protons are transferred into the cathode through the polymer electrolyte membrane. In addition, an oxidant is supplied to the cathode, and then the oxidant, protons and electrons are reacted on catalysts of the cathode to produce electricity along with water.

A fuel cell system is composed of a stack, a reformer, a fuel tank, and a fuel pump. The stack forms a body of the fuel cell system, and the fuel pump provides the fuel stored in the fuel tank to the reformer. The reformer reforms the fuel to generate the hydrogen gas and supplies the hydrogen gas to the stack.

A reformer of a general fuel cell system comprises a reforming reaction part which generates hydrogen gas from a fuel through a catalyst reforming reaction using heat energy, and a carbon monoxide reducing part which reduces a carbon monoxide concentration in the hydrogen gas through an oxidation reaction of the hydrogen gas with oxygen. Such a reforming reaction is performed by a reforming catalyst, and therefore there are many researches into a reforming catalyst.

WON PARK J ET AL: "Selective oxidation of CO in hydrogen-rich stream over Cu-Ce catalyst promoted with transition metals" INTERNATIONAL JOURNAL OF HYDROGEN ENERGY, ELSEVIER SCIENCE PUBLISHERS B.V., BARKING, GB, vol. 30, no. 2, February 2005 (2005-02) discloses a comparative Cu-Ce catalyst doped with 0.5 wt% Ni, which is used for the conversion of CO in hydrogen-rich gas stream.

The present invention provides a carbon monoxide oxidizing catalyst having excellent carbon monoxide oxidation efficiency for a reformer of a fuel cell system.

The present invention also provides a membrane-electrode assembly for a fuel cell including the carbon monoxide oxidizing catalyst.

In a first aspect of the present invention there is provided a carbon monoxide oxidizing catalyst for a reformer of a fuel cell system which includes: a carrier selected from the group consisting of alumina, cordierite, and combinations thereof; and an active material consisting of CeO₂, NiO, and CuO, which is supported on the carrier wherein the catalyst comprises 0.1 to 0.4 wt % NiO, and wherein 2.5 to 5 wt% of CuO is used.

According to a second aspect of the present invention, a fuel cell system comprises: a reformer including a reforming reaction part which generates hydrogen gas from a fuel through a catalyst reforming reaction using heat energy, and a carbon monoxide reducing part which reduces a carbon monoxide concentration in the hydrogen gas through an oxidation reaction of the hydrogen gas with an oxidant; at least one electricity generating element for generating electrical energy by electrochemical reactions of the hydrogen gas and oxygen; a fuel supplier for supplying the fuel to the reforming reaction part; an oxidant supplier for supplying the oxidant to the carbon monoxide reduction part and the electricity generating element, respectively; and a cooler for cooling heat generated from the carbon monoxide reduction part by circulating the fuel supplied to the reforming reaction part to the carbon monoxide reduction part. The reformer includes the above carbon monoxide oxidizing catalyst.

According to a third aspect of the invention, there is provided the use of a carbon monoxide oxidizing catalyst according to the first aspect of the present invention.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIGURE 1 is a schematic diagram showing the structure of a fuel cell system according to an embodiment of the present invention.

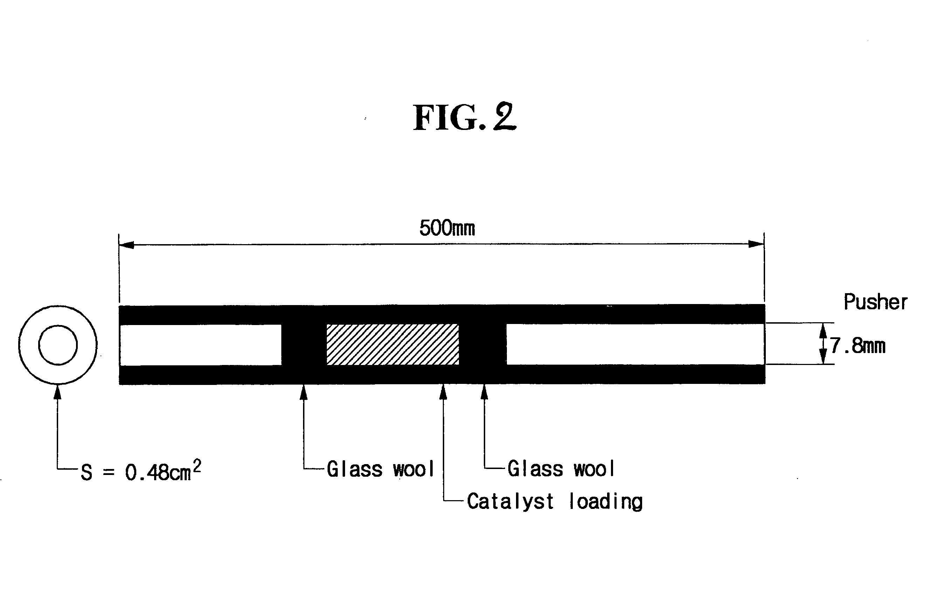

FIGURE 2 is a temperature profile graph during the calcination process according to Example 3 of the present invention.

Exemplary embodiments of the present invention will hereinafter be described in detail with reference to the accompanying drawings.

According to one embodiment of the present invention, a carbon monoxide oxidizing catalyst for a reformer of a fuel cell system is provided.

A fuel cell system generally includes an electricity generating element and a fuel supplier, where a polymer electrolyte fuel cell of the fuel cell system includes a reformer for generating hydrogen gas from reforming the fuel.

The reformer includes a reforming reaction part for generating hydrogen gas from the fuel through a catalyst reforming reaction by heat energy, and a carbon monoxide reduction part for reducing the concentration of carbon monoxide included in the hydrogen gas through an oxidation reaction of hydrogen gas with an oxidant.

In the carbon monoxide reduction part, a preferential oxidation (PROX) is performed. Through the preferential oxidation, the carbon monoxide content included as impurities is reduced to a ppm level. It is necessary to reduce the carbon monoxide content since it poisons fuel cell catalysts, thereby deteriorating electrode performance.

Platinum-based metals such as Pt, Rh, Ru, and so on are used for a conventional preferential oxidation process. However, these metals have high cost and low selectivity. Recently, transition element catalysts have been researched. For example, it is suggested that a Cu-Ce mixed catalyst has improved CO oxidation reaction activity compared to a Cu catalyst.

However, there is still a need for improvement of CO oxidation reaction activity. According to one embodiment of the present invention, a transition element is included in a Cu-Ce catalyst to improve catalyst activity.

The carbon monoxide oxidizing catalyst for a reformer of a fuel cell system according to one embodiment includes: a carrier selected from the group consisting of alumina, cordierite, and combinations thereof; and an active material consisting of CeO₂, NiO, and CuO supported on the carrier wherein the catalyst comprises 0.1 to 0.4 wt % NiO, and 2.5 to 5 wt% of CuO. When comparing NiO with CoO, NiO is smaller and also chemically and structurally more stable than CoO, and therefore NiO is not changed to another phase to effectively oxidize carbon monoxide during fuel reforming reaction. In this regard, NiO is better than CoO as a catalyst to prevent catalyst poisoning by carbon monoxide.

Herein, the amount of NiO included in the carbon monoxide oxidizing catalyst ranges from 0.1 to 0.4 wt%. When the amount of NiO is less than 0.1 wt%, the effect of including NiO is insufficient, but when the amount is more than 2 wt%, the activity thereof is deteriorated.

Furthermore, the carbon monoxide oxidizing catalyst includes 10 to 30 wt% of CeO₂. According to another embodiment, it includes 15 to 25 wt% of CeO₂. The carbon monoxide oxidizing catalyst includes 1 to 10 wt% of CuO. According to another embodiment, it includes 2.5 to 5 wt% of CuO. When the amount of CeO₂ is less than 10 wt%, the oxygen diffusion concentration is too low, but when the amount is more than 30 wt%, the pore structure and thermal stability are remarkably deteriorated. Herein, the carbon monoxide oxidizing catalyst has a pore structure. According to another embodiment, the porosity S_{BET} thereof ranges from 200 to 300m²/g. When the porosity S_{BET} is less than 200m²/g, the reactant is insufficiently transferred into the surface of the catalyst, but when it is more than 300m²/g, the obtained catalyst is physically unstable and brittle.

According to an embodiment, the carrier includes cordierite which is reformed to alumina. The method for reforming to alumina is well known to those skilled in the art, and thus a detailed description is omitted, and it is simply described as follows. An alumina compound, such as alumina nitrate, is dissolved in water in the amount of 1 to 10 wt% to provide an alumina solution. Herein, according to another embodiment, the alumina compound may be included in the amount of 2 to 5 wt%. Subsequently, cordierite is immersed in the alumina solution and dried at 120 ± 10° C, this process being repeated 3 to 5 times. The amount of cordierite immersed in the alumina solution ranges from 5 to 20 wt%. According to another embodiment, the amount ranges from 10 to 15 wt%.

The carbon monoxide oxidizing catalyst may further include additives, such as Cu, Au, Ru, Pt, Na, Ca, K, or a mixture thereof. Among them, Cu, Au, Ru, and Pt may form an active site on the surface of the catalyst. The adding amount of the elements may range from 0.1 to 3 parts by weight based on 100 parts by weight of the carbon monoxide oxidizing catalyst. When the adding amount of the elements is less than 0.1 parts by weight, the active site is insufficient, but when it is more than 3 parts by weight, the metal cluster is too large to produce water as a side-product.

Furthermore, when Na, Ca, or K is interposed in the CeO₂ structure, it may form defects that increase activity. The elements may be added in 0.001 to 1 parts by weight based on 100 parts by weight of the carbon monoxide oxidizing catalyst. According to another embodiment, the amount ranges from 0.1 to 0.5 parts by weight. When the elements are added in less than 0.001 parts by weight, the effects are insufficient. On the other hand, when they are added in more than 1 parts by weight, they form an excess of defects, thereby deteriorating the oxygen diffusion.

The carbon monoxide oxidizing catalyst may be prepared by various techniques. Two procedures will be illustrated in some detail, but the invention is not limited to them. One of the procedures is as follows:
Firstly, alumina or cordierite is mixed with a cerium compound solution.

Herein, the mixture ratio of alumina or cordierite and the cerium compound ranges from 50 to 90 wt% or 10 to 50 wt%. According to another embodiment, it may range from 80 to 75 wt% or 20 to 25 wt%. When the cerium compound is added in more than 50 wt%, it may provide a bulk cerium oxide having a low specific surface area, thereby deteriorating the pore structure. When it is added in less than 10 wt%, the cerium oxide is insufficiently incorporated in the surface of the alumina or cordierite so that oxygen vacancy is not fully formed, thereby decreasing the oxygen diffusion. The cerium-containing compound may be ammonium cerium nitrate, cerium nitrate, cerium acetate, cerium chloride, or a mixture thereof. The cerium compound may be used in the form of a hydrate.

The cerium-containing compound may include a solvent of water.

The obtained mixture is added to a transition element-containing compound solution. The transition element-containing compound solution may be added to provide a transition element compound of 0.1 to 10 parts by weight based on 100 parts by weight of cerium compound. According to another embodiment, it may range from 0.1 to 4 parts by weight. When the adding amount of the transition element compound solution is more than 10 parts by weight, it is not impregnated, and when it is less than 0.1 parts by weight, the transition element compound is not sufficiently supported, and so the process should be repeated.

The transition element-containing compound may include a nitrate, an acetate, or a chloride, and representative examples thereof include Ni(NO₃)₂6H₂O, Ni(OCOCH₃)₂, or NiCl₂. The transition element-containing compound may be used in the form of a hydrate.

The transition element compound solution may include a solvent of water.
In the adding process, Cu, Au, Ru, Pt, Na, Ca, K, or a mixture thereof may be further added.

The obtained mixture is calcinated. The calcination process may be performed at 450 to 550° C. When the calcination process is performed at less than 450° C, the CeO₂ forming reaction is delayed, but when it is performed at more than 550° C, the pore structure is damaged.

To the calcinated product, a Cu compound solution may be added in 1 to 10 parts by weight based on 100 parts by weight of cerium compound. According to another embodiment, the adding amount of the Cu compound solution ranges from 2.5 to 5 parts by weight. When the Cu compound solution is less than 1 wt%, the supported Cu is insufficient so that the process needs to be repeated several times. On the other hand, when it is more than 10 wt%, Cu is not uniformly supported on the carrier.
The Cu salt may include a nitrate or an acetate, and representative examples thereof include Cu(NO₃)₂ or Cu(OCOCH₃). The copper compound may be used in the form of a hydrate.

The Cu salt solution may include a solvent of water.

Then, the obtained mixture is calcinated. The calcination process may be performed at 450 to 550° C. When the calcination process is performed at less than 450 C, the solid reactant is insufficiently diffused and the copper does not reach the active site so that it is hard to provide an active copper. On the other hand, when it is performed at more than 550° C, the surface is reduced and the pore size is decreased, and it also blocks the transmission of the gas reactant into the active site of the catalyst surface.

Another procedure is as follows:

A Cu compound solution is mixed with a transition element-containing compound solution. The mixture is mixed with a cerium-containing compound. In the adding process, Cu, Au, Ru, Pt, Na, Ca, K, or a mixture thereof may be further added.
The Cu compound solution, the transition element-containing compound solution, and the cerium-containing compound may be the above Cu compound solution, the transition element-containing compound solution, and the cerium-containing compound.

The resulting mixture is mixed alumina or cordierite, and the obtained mixture is calcinated. The calcination process may be performed at 450 to 550° C. When the calcination process is performed at less than 450° C, the solid reactant is insufficiently diffused and the copper does not reach the active site so that it is hard to provide an active copper. On the other hand, when it is performed at more than 550° C, the surface is reduced and the pore size is decreased, and it also blocks the transmission of the gas reactant into the active site of the catalyst surface.

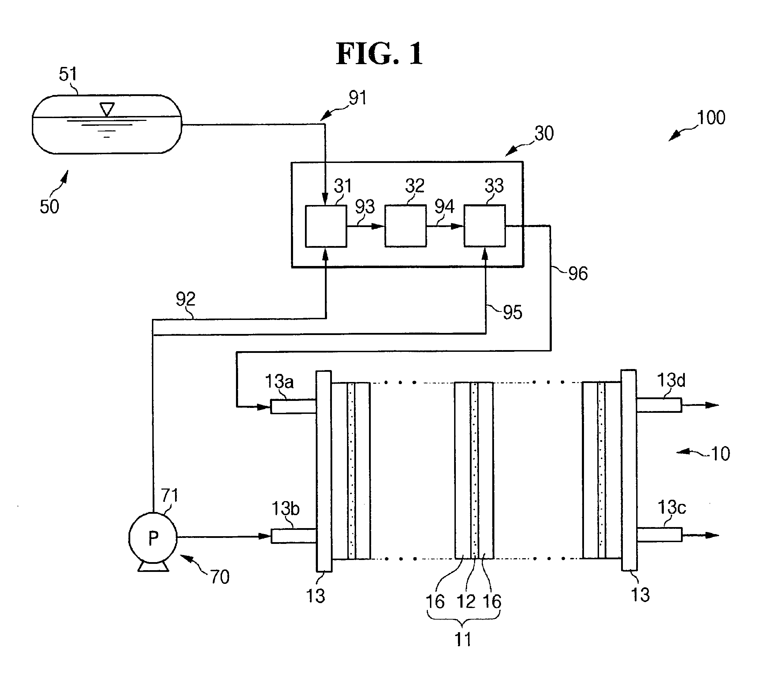

As the carbon monoxide oxidizing catalyst is used in a fuel cell system, the fuel cell system will be described with reference to FIGURE 1, which is a schematic diagram showing the structure of a fuel cell system according to an embodiment of the present invention.

As shown in FIGURE 1, the fuel cell system 100 comprises: a stack 10 including an electricity generating element 11 which generates electrical energy through electrochemical reactions; a reformer 30 which generates hydrogen gas from a liquid fuel and supplies the hydrogen gas; a fuel supplier 50 for supplying a fuel to the reformer 30; and an oxidant supplier 70 for supplying an oxidant to the reformer 30 and the stack 10, respectively.

The electricity generating element 11 is formed as a minimum unit for generating electricity by disposing a membrane-electrode assembly (MEA) 12 between two separators 16, and then a stack 10 is formed with a stacked structure by arranging a plurality of minimum units. The membrane-electrode assembly 12 includes an anode and a cathode, and performs hydrogen gas oxidation and oxygen reduction reactions. The separators 16 supply hydrogen gas and oxidant through gas passage paths formed at both sides of the membrane-electrode assembly 12, and also function as conductors connecting the anode and the cathode in series.

The stack 10 can additionally include pressing plates 13 for positioning a plurality of the electricity generating elements 11 closely adjacent to each other at the outermost ends of the stack 10. However, the stack 10 of a fuel cell according to the present embodiment can be formed by positioning separators 16 at the outermost ends of the electricity generating elements 11 so as to play a role in pressing the electricity generating elements 11 instead of using the separate pressing plates 13. Conversely, the pressing plates 13 can be formed so as to intrinsically function as the separators 16 in addition to closely arranging the plurality of electricity generating elements 11.
The pressing plates 13 include a first inlet 13a to supply hydrogen gas to the electricity generating elements 11, a second inlet 13b to supply oxidant to the electricity generating elements 11 from the oxidant supplier 40, a first outlet 13c to release hydrogen gas remaining after a reaction at the anodes of the membrane-electrode assemblies 12, and a second outlet 13d to release non-reacted air including moisture generated through a reduction reaction of the oxidant at the cathodes of the membrane-electrode assemblies 12.

The reformer 30 has a structure for generating hydrogen gas from a fuel by chemical catalytic reactions using heat energy and for reducing carbon monoxide concentration in the hydrogen gas.

The reformer 30 includes a heating source 31 for commonly generating heat energy through a catalytic oxidation reaction of the fuel and the oxidant, a reforming reaction part 32 for generating hydrogen gas from the fuel through a steam reforming (SR) catalyst reaction by the heat energy, and a carbon monoxide reduction part 33 for reducing the concentration of carbon monoxide included in the hydrogen gas.
In the present invention, the reaction of the reformer 30 is not limited to the steam reforming catalyst reaction, and may include an auto-thermal reforming (ATR) reaction or partial oxidation (POX) without the use of the heating source 31.
The heating source 31 is connected to a fuel tank 51 through a first supply line 91 having a pipe shape, and is connected to an oxidant pump 71 through a second supply line 92 having a pipe shape. The liquid fuel and oxidant pass through the heating source 31. The heating source 31 includes a catalyst layer (not shown) which accelerates the oxidation reaction of the fuel with the oxidant to generate the heat energy. Herein, the heating source 31 is formed as a plate which provides a channel (not shown) capable of inflowing the liquid fuel and the oxidant. The surface of the channel is coated with the catalyst layer. The heating source 31 is shaped as a cylinder which has a predetermined internal space. The internal space may be filled with a catalyst layer, such as a pellet type catalyst module or a honey comb type catalyst module.

The reforming reaction part 32 absorbs the heat energy generated from the heating source 31 so as to generate the hydrogen gas from the fuel through the steam-reforming catalyst reforming reaction of the fuel supplied from the fuel tank 51. The reforming reaction part 32 is directly connected to the heating source 31 via a third supply line 93. In addition, the reforming reaction part 32 includes a catalyst layer (not shown) for generating the hydrogen gas by accelerating the steam reforming reaction of the fuel. Herein, the reforming reaction part 32 includes a channel (not shown) capable of inflowing the fuel. The surface of the channel is coated with a catalyst layer. The reforming reaction part 32 is shaped as a cylinder which has a predetermined internal space. The internal space may be filled with a catalyst layer, such as a pellet type catalyst module or a honey comb type catalyst module.
The carbon monoxide reduction part 33 reduces carbon monoxide concentration in the hydrogen gas through a preferential CO oxidation catalyst reaction of the hydrogen gas with air. The hydrogen gas is generated from the reformer reaction part 32 and the air is supplied from the oxidant pump 71. The carbon monoxide reduction part 33 is connected to the reformer reaction part 32 via a fourth supply line 94, and to the oxidant pump 71 via a fifth supply line 95. Thus, the hydrogen gas and the oxidant pass through the carbon monoxide reduction part 33. The carbon monoxide reduction part 33 may include a catalyst layer (not shown) which includes a catalyst. The catalyst accelerates the preferential oxidation reaction to reduce the carbon monoxide concentration included in the hydrogen gas. Herein, the carbon monoxide reduction part 33 includes a channel (not shown) capable of inflowing the fuel. The surface of the channel is coated with the catalyst layer. The carbon monoxide reduction part 33 is shaped as a cylinder which has a predetermined internal space. The internal space may be filled with a catalyst layer, such as a pellet type catalyst module or a honey comb type catalyst module.

Herein, the carbon monoxide reduction part 33 is connected to the first inlet 13a of the stack 10 via a sixth supply line 96. The carbon monoxide reduction part 33 provides the electricity generating elements 11 of the stack 10 with the hydrogen gas in which the carbon monoxide concentration is reduced by the carbon monoxide reduction part 33. In addition, the carbon monoxide reduction part 33 may be formed of thermal conductive stainless steel, aluminium, copper, iron, or the like.

The membrane-electrode assembly, which constitutes the electricity generating element of the above fuel cell system, includes a cathode and an anode, and a polymer electrolyte membrane interposed between the cathode and anode.

The cathode and the anode each include an electrode substrate and a catalyst layer. The catalyst layer includes a platinum-based catalyst selected from the group consisting of platinum, ruthenium, osmium, platinum-ruthenium alloys, platinum-osmium alloys, platinum-palladium alloys, platinum-M alloys (where M is a transition element selected from the group consisting of Ga, Ti, V, Cr, Mn, Fe, Co, Ni, Cu, Zn, Sn, Mo, W, Rh, Ru, and combinations thereof), and combinations thereof. More specifically, non-limiting examples of the platinum-based catalyst are selected from the group consisting of Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, Pt/Ru/Sn/W, and combinations thereof.

Such a metal catalyst may be used in the form of a metal itself (black catalyst), or one supported on a carrier. The carrier may include carbon such as graphite, denka black, ketjen black, acetylene black, carbon nanotubes, carbon nanofiber, carbon nanowire, carbon nanoballs, or activated carbon, or an inorganic particulate such as alumina, silica, zirconia, or titania. Carbon is generally used. When the catalyst includes a noble metal supported on a carrier, it may include any one available in the market or one prepared by carrying a noble metal on a carrier. The process for supporting a noble metal on a carrier is well known to those having skill in the art, and thus more details will not described herein.

The catalyst layer may further include a binder resin to improve its adherence and proton transference.

The binder resin may be a proton conductive polymer resin having a cation exchange group selected from the group consisting of a sulfonic acid group, a carboxylic acid group, a phosphoric acid group, a phosphonic acid group, and derivatives thereof, at its side chain. Non-limiting examples of the polymer include at least one proton conductive polymer selected from the group consisting of fluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, and polyphenylquinoxaline-based polymers. In one embodiment, the proton conductive polymer is at least one selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), and poly (2,5-benzimidazole).

The H can be replaced with Na, K, Li, Cs, or tetrabutylammonium in a proton conductive group of the proton conductive polymer. When the H is replaced with Na in an ion exchange group at the terminal end of the proton conductive group, NaOH is used. When the H is replaced with tetrabutylammonium, tetrabutylammonium hydroxide is used. K, Li, or Cs can also be replaced by using appropriate compounds. A method of replacing H is known in this art, and therefore is not described in detail. The binder resin may be used singularly or as a mixture. Optionally, the binder resin may be used along with a non-conductive polymer to further improve adherence strength between a polymer electrolyte membrane and the catalyst layer. The amount of the binder resin used may be adjusted to its usage purpose.

Non-limiting examples of the non-conductive polymer include polytetrafluoroethylene (PTFE), tetrafluoroethylene-hexafluoropropylene copolymers (FEP), tetrafluoroethylene- perfluoro alkyl vinylether copolymers (PFA), ethylene/tetrafluoroethylene (ETFE)), ethylenechlorotrifluoro-ethylene copolymers (ECTFE), polyvinylidene fluoride, polyvinylidene fluoride-hexafluoropropylene copolymers (PVdF-HFP), dodecyl benzene sulfonic acid, sorbitol, and combinations thereof.

The electrode substrate supports the electrode, and provides a path for diffusing and transferring fuel and an oxidant to the catalyst layer. In one embodiment, the electrode substrate is formed from a material such as carbon paper, carbon cloth or carbon felt, or a metal cloth which includes a metal film formed on a surface of a porous cloth film or a cloth composed of polymer fibers, but the electrode substrate is not limited thereto.

The electrode substrate may include water-repellent fluoro-based resins to prevent the deterioration of diffusion efficiency due to the water generated during the operation of a fuel cell. The fluoro-based resin may include polytetrafluoroethylene, polyvinylidene fluoride, polyhexafluoropropylene, polyperfluoroalkylvinylether, polyperfluorosulfonylfluoride alkoxyvinyl ether, fluorinated ethylene propylene, polychlorotrifluoroethylene, or a copolymer thereof.

A microporous layer (MPL) can be added between the aforementioned electrode substrate and catalyst layer to increase reactant diffusion effects. The microporous layer generally includes conductive powders with a certain particle diameter. The conductive material may include, but is not limited to, carbon powder, carbon black, acetylene black, activated carbon, carbon fiber, fullerene, nano-carbon, or combinations thereof. The nano-carbon may include a material such as carbon nanotubes, carbon nanofiber, carbon nanowire, carbon nanohorns, carbon nanorings, or combinations thereof.

The microporous layer is formed by coating a composition including a conductive powder, a binder resin, and a solvent on the electrode substrate. The binder resin may include, but is not limited to, polytetrafluoroethylene, polyvinylidenefluoride, polyhexafluoropropylene, polyperfluoroalkylvinylether, polyperfluorosulfonylfluoride, alkoxyvinyl ether, polyvinylalcohol, cellulose acetate, or copolymers thereof. The solvent may include, but is not limited to, an alcohol such as ethanol, isopropylalcohol, n-propylalcohol, butanol, and so on, water, dimethylacetamide, dimethylsulfoxide, N-methylpyrrolidone, tetrahydrofuran, and so on. The coating method may include, but is not limited to, screen printing, spray coating, doctor blade methods, gravure coating, dip coating, silk screening, painting, and so on, depending on the viscosity of the composition.

The polymer electrolyte membrane may be any proton conductive polymer having a cation exchange group selected from the group consisting of a sulfonic acid group, a carboxylic acid group, a phosphoric acid group, a phosphonic acid group, and derivatives thereof, at its side chain.

Non-limiting examples of the polymer resin include at least one proton conductive polymer selected from the group consisting of fluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, and polyphenylquinoxaline-based polymers. In one embodiment, the proton conductive polymer is at least one selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), and poly (2,5-benzimidazole).

The following examples illustrate the present invention in more detail. However, it is to be understood that the present invention is not limited to these examples.

### Example 1

Alumina was added into a cerium nitrate (Ce(NO₃)₃6H₂O) aqueous solution. Herein, the amounts of alumina and cerium nitrate were 7.4g and 5.30g, respectively. Subsequently, Ni(NO₃)₂6H₂O solution was added to the mixture. Herein, the mixture of alumina and cerium nitrate and the Ni(NO₃)₂6H₂O solution were mixed to provide a mixing weight ratio of 12.70 : 0.0389.

The obtained mixture was calcinated at 500°C to provide a NiO/CeO₂/Al₂O₃ compound.

1 mole of Cu(NO₃)₂3H₂O (1M of Cu(NO₃)₂3H₂O per 1000g of water) solution was added to the mixture at a weight ratio of 4.98 : 9.1, and then the mixture was calcinated at 500°C.

### Example 2

The same process as in Example 1 was performed except that cordierite was used instead of alumina.

The carbon monoxide oxidizing catalyst for the reformer for the fuel cell system has very excellent carbon monoxide oxidizing activity. Thereby, it can decrease to a minute trace the amount of carbon monoxide generated while the hydrogen gas is generated by reforming the fuel. Accordingly, it is possible to prevent catalyst poisoning by carbon monoxide, and to improve the battery performance and the lifespan thereof.

## Claims

1. A carbon monoxide oxidizing catalyst for a reformer of a fuel cell system comprising:
a carrier selected from the group consisting of alumina, cordierite, and combinations thereof; and
an active material consisting of CeO₂, NiO, and CuO, which is supported on the carrier, wherein the catalyst comprises 0.1 to 0.4 wt% NiO, and wherein 2.5 to 5wt% of CuO is used.

2. The carbon monoxide oxidizing catalyst of claim 1, wherein 10 to 30 wt% of CeO₂ is used.

3. The carbon monoxide oxidizing catalyst of claim 2, wherein 15 to 25 wt% of CeO₂ is used.

4. The carbon monoxide oxidizing catalyst of any one of the preceding claims, wherein the cordierite is modified with alumina.

5. A fuel cell system, comprising:
a reformer which includes a reforming reaction part which generates hydrogen gas from a fuel by a catalyst reforming reaction requiring heat energy, and a carbon monoxide reducing part which reduces carbon monoxide concentration in the hydrogen gas through an oxidation reaction of the hydrogen gas with oxygen;
at least one electricity generating element for generating electrical energy by electrochemical reactions of the hydrogen gas and oxygen;
a fuel supplier for supplying the fuel to the reforming reaction part;
an oxidant supplier for supplying an oxidant to the carbon monoxide reducing part and said at least one electricity generating element, respectively; and
a cooler for cooling heat generated by the carbon monoxide reducing part by circulating the fuel supplied to the reforming reaction part to the carbon monoxide reducing part;
wherein the reformer further comprises a carrier selected from the group consisting of alumina, cordierite, and combinations thereof, and an active material consisting of CeO₂, NiO, and CuO, which is supported on the carrier, wherein the catalyst comprises 0.1 to 0.4 wt% NiO and wherein 2.5 to 5wt% of CuO is used.

6. The fuel cell system of claim 5, wherein the carbon monoxide oxidizing catalyst comprises 10 to 30 wt% of CeO₂.

7. The fuel cell system of claim 6, wherein the carbon monoxide oxidizing catalyst comprises 15 to 25 wt% of CeO₂.

8. The fuel cell system of any one of claims 5 to 7, wherein cordierite is modified with alumina in forming the carrier of the catalyst.

9. Use of a carbon monoxide oxidizing catalyst as claimed in any one of claims 1 to 4 for a reformer of a fuel cell system.

## Patentansprüche

1. Katalysator zum Oxidieren von Kohlenmonoxid für einen Reformer eines Brennstoffzellensystems, der Folgendes aufweist:
einen Träger, der aus der aus Tonerde, Cordierit und
Kombinationen davon bestehenden Gruppe ausgewählt ist, und
ein aktives Material, das aus CeO₂, NiO und CuO besteht und auf dem Träger unterstützt wird, wobei der Katalysator 0,1 bis 0,4 Gew.-% NiO umfasst, und wobei 2,5 bis 5 Gew.-% CuO benutzt werden.

2. Katalysator zum Oxidieren von Kohlenmonoxid nach Anspruch 1, wobei 10 bis 30 Gew.-% CeO₂ benutzt werden.

3. Katalysator zum Oxidieren von Kohlenmonoxid nach Anspruch 2, wobei 15 bis 25 Gew.-% Ce02 benutzt werden.

4. Katalysator zum Oxidieren von Kohlenmonoxid nach einem der vorherigen Ansprüche, wobei das Cordierit mit Tonerde modifiziert ist.

5. Brennstoffzellensystem, das Folgendes aufweist:
einen Reformer, der einen Reformingreaktionsteil aufweist,
welcher aus einem Kraftstoff über eine unter Katalysatoreinwirkung stattfindende endotherme Reforming-Reaktion Wasserstoffgas erzeugt, und einen Kohlenmonoxid-Reduzierteil, der durch eine Oxidationsreaktion des Wasserstoffgases mit Sauerstoff die
Kohlenmonoxidkonzentration im Wasserstoffgas reduziert,
mindestens ein Elektrizitätserzeugungselement zum Erzeugen von elektrischer Energie durch elektrochemische Reaktionen des Wasserstoffgases mit Sauerstoff,
einen Kraftstoffzuführer zum Zuführen des Kraftstoffes zu dem Reformingreaktionsteil,
einen Oxidanszuführer zum Zuführen eines Oxidans zu dem Kohlenmonoxid-Reduzierteil bzw. dem mindestens einen Elektrizitätserzeugungselement und
einen Kühler zum Kühlen der von dem Kohlenmonoxid-Reduzierteil erzeugten Wärme durch Zirkulieren des dem Reformingreaktionsteil zugeführten Kraftstoffes an den Kohlenmonoxid-Reduzierteil;
wobei der Reformer ferner einen Träger umfasst, der aus der aus Tonerde, Cordierit und Kombinationen davon bestehenden Gruppe ausgewählt ist, sowie ein aktives Material, das aus CeO₂, NiO und CuO besteht und auf dem Träger unterstützt wird, wobei der Katalysator 0,1 bis 0,4 Gew.-% NiO umfasst und wobei 2,5 bis 5 Gew.-% CuO benutzt werden.

6. Brennstoffzellensystem nach Anspruch 5, wobei der Katalysator zum Oxidieren des Kohlenmonoxids 10 bis 30 Gew.-% Ce02 umfasst.

7. Brennstoffzellensystem nach Anspruch 6, wobei der Katalysator zum Oxidieren des Kohlenmonoxids 15 bis 25 Gew.-% Ce02 umfasst.

8. Brennstoffzellensystem nach einem der Ansprüche 5 bis 7, wobei beim Ausbilden des Trägers des Katalysators Cordierit mit Tonerde modifiziert wird.

9. Benutzen eines Katalysators zum Oxidieren von Kohlenmonoxid nach einem der Ansprüche 1 bis 4 für einen Reformer eines Brennstoffzellensystems.

## Revendications

1. Catalyseur pour l'oxydation de monoxyde de carbone pour un réformeur d'un système de pile à combustible comprenant :
un support choisi dans le groupe comprenant l'alumine, la cordiérite et des combinaisons de celles-ci ; et
un matériau actif consistant en CeO₂, NiO et CuO qui est porté sur le support, le catalyseur comprenant 0,1 à 0,4 en poids de NiO et dans lequel on utilise 2,5 à 5 % en poids de CuO.

2. Catalyseur pour l'oxydation de monoxyde de carbone selon la revendication 1, dans lequel on utilise 10 à 30 % de CeO₂.

3. Catalyseur pour l'oxydation de monoxyde de carbone selon la revendication 2, dans lequel on utilise 15 à 25 % en poids de CeO₂.

4. Catalyseur pour l'oxydation de monoxyde de carbone selon l'une quelconque des revendications précédentes, dans lequel la cordiérite est modifiée avec de l'alumine.

5. Système de pile à combustible comprenant :
un réformeur qui comprend une partie de réaction de reformage qui génère un gaz d'hydrogène à partir d'un carburant par une réaction de reformage de catalyseur nécessitant une énergie thermique, et une partie de réduction de monoxyde de carbone qui réduit la concentration de monoxyde de carbone dans le gaz d'hydrogène par une réaction d'oxydation du gaz d'hydrogène avec de l'oxygène ;
au moins un élément générant de l'électricité pour générer une énergie électrique par réactions électrochimiques du gaz d'hydrogène et de l'oxygène ;
un fournisseur de carburant pour fournir le carburant à la partie de réaction de reformage ;
un fournisseur d'oxydant pour fournir un oxydant à la partie de réduction du monoxyde de carbone et au moins un élément générant de l'électricité, respectivement ; et
un refroidisseur pour réduire la chaleur générée par la partie de réduction du monoxyde de carbone par circulation du carburant fourni à la partie de reformage, à la partie de réduction du monoxyde de carbone ;
dans lequel le réformeur comprend en outre un support choisi dans le groupe comprenant l'alumine, la cordiérite et des combinaisons de celles-ci, et un matériau actif consistant en CeO₂, NiO et CuO qui est porté sur le support, le catalyseur comprenant 0,1 à 0,4 % en poids de NiO et dans lequel on utilise 2,5 à 5 % en poids de CuO.

6. Système de pile à combustible selon la revendication 5, dans lequel le catalyseur pour l'oxydation de monoxyde de carbone comprend 10 à 30 % de CeO₂.

7. Système de pile à combustible selon la revendication 6, dans lequel le catalyseur pour l'oxydation de monoxyde de carbone comprend 15 à 25 % en poids de CeO₂.

8. Système de pile à combustible selon l'une quelconque des revendications 5 à 7, dans lequel la cordiérite est modifiée avec de l'alumine, en formant le support du catalyseur.

9. Utilisation d'un catalyseur pour l'oxydation de monoxyde de carbone selon l'une quelconque des revendications 1 à 4 pour un réformeur d'un système de pile à combustible.
